(19) Europäisches Patentamt

European Patent Office

Office européen des brevets

(11) EP 1 283 588 A2

## (12) DEMANDE DE BREVET EUROPEEN

(43) Date de publication:
**12.02.2003 Bulletin 2003/07**

(51) Int Cl.7: **H02M 1/12**, H02M 7/162

(21) Numéro de dépôt: 02291997.1

(22) Date de dépôt: **08.08.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **10.08.2001 FR 0110729**

(71) Demandeur: **Electricité de France**
**75008 Paris (FR)**

(72) Inventeurs:
• **Nuns, Jacques**
  **77250 Ecuelles (FR)**
• **Riffault, Bernard**
  **77250 Veneux Les Sablons (FR)**

(74) Mandataire: **Dubois-Chabert, Guy et al**
**BREVATOME**
**3, rue du Docteur Lanceraux**
**75008 Paris (FR)**

### (54) Inductance à valeur commandable par commutation

(57) Un circuit électrique (20) comporte une inductance (2) couplée à une alimentation. L'inductance est formée par un enroulement primaire (3) couplé magnétiquement à un enroulement secondaire (4) chargée par une résistance de charge (6) connectée en parallèle sur l'enroulement secondaire (4). Le circuit (20) est caractérisé en ce qu'il comporte un interrupteur (81) commandable connecté en parallèle sur l'enroulement secondaire (4), capable d'une position passante dans laquelle l'enroulement secondaire (4) est court-circuité en sorte que la valeur de l'inductance (2) se trouve annulée et d'une position ouverte dans laquelle l'inductance (2) présente une valeur nominale souhaitée.

Un tel circuit (20) est utilisé pour annuler en permanence l'inductance de réduction d'encoches de commutation sauf pendant la durée des commutations.

FIG. 1

EP 1 283 588 A2

## Description

### Domaine de l'invention

L'invention se situe dans le domaine des circuits comportant une inductance dont on peut faire varier la valeur entre une première valeur nominale et une seconde valeur. Elle concerne, en particulier, un circuit d'alimentation comportant de telles inductances en série avec un pont redresseur.

### Arrière plan technologique

Il est connu de redresser des courants alternatifs produits par exemple par un alternateur, pour obtenir un courant redressé. Les courants redressés sont ensuite utilisés à diverses fins.

Les commutations au niveau de circuits redresseurs provoquent des encoches de commutation dans la tension entre phases du circuit d'alimentation. L'influence de ces encoches de commutation dans des circuits électriques alimentés par le même réseau que celui alimentant le redresseur et situés en amont des redresseurs, est ressentie d'autant plus fortement au niveau du circuit d'un autre usager, que le circuit de cet autre usager est plus proche du redresseur. La présence de ces encoches de commutation est préjudiciable au bon fonctionnement de certains appareils et, en conséquence, il convient de limiter leur niveau. A cette fin, il est connu de mettre en série avec le redresseur, des inductances qui sont destinées à réduire la profondeur desdites encoches de commutation.

### Brève description de l'invention.

On remarque que dans l'art antérieur qui vient d'être décrit les inductances destinées à amortir les encoches de commutation remplissent bien leur rôle. Elles ont cependant un inconvénient en ce sens que du fait de leur présence, elles créent une chute de tension inductive en amont du redresseur qui de ce fait est alimenté en permanence par une tension plus réduite. De plus pour diverses raisons, ces inductances sont en général des inductances à air (sans noyau magnétique) et de ce fait l'obtention d'une valeur souhaitée nécessite un enroulement ayant un grand nombre de spires.

L'inventeur a observé que la présence de ces inductances n'est nécessaire qu'aux instants de commutation, et qu'elle est préjudiciable en dehors de ces instants. La durée des commutations par rapport au cycle de commutation est nécessairement très courte. Pour une optimisation du circuit d'alimentation il convient donc de bénéficier de la présence des inductances pendant les durées de commutation, et de supprimer lesdites inductances en dehors de ces dits instants.

Cette suppression des inductances est précisément l'objet de la présente invention.

La présente invention ne supprime pas physiquement la présence d'enroulements formant inductance en dehors des durées de commutation, mais elle permet d'annuler la valeur des inductances pendant les périodes de temps situées en dehors des durées de commutation. Il en résulte qu'avec la présente invention, l'inductance ne charge le circuit redresseur que pendant les instants de commutation et ne le charge pas en dehors de ces instants.

A cette fin, l'inductance que l'on veut supprimer, est constituée par un circuit comportant un enroulement primaire et un enroulement secondaire, cet enroulement secondaire étant couplé à l'enroulement primaire, par exemple, par la présence d'un circuit magnétique. L'enroulement secondaire est connecté à une impédance de charge. L'inductance ainsi constituée par les enroulements primaire et secondaire et par l'impédance de charge est également connectée en parallèle sur un moyen de commutation ayant une entrée de commande, permettant de mettre en court-circuit l'enroulement secondaire et, de ce fait de mettre en court circuit l'inductance vue du primaire. Ainsi pendant toutes les durées où l'on veut annuler l'inductance, on commande le moyen de commutation de façon à ce que l'enroulement secondaire soit court-circuité. Au contraire lorsque l'on a besoin de l'inductance, par exemple pour réduire la profondeur des encoches de commutation le moyen de commutation est commandé dans une position ouverte.

En résumé, l'invention est relative à un circuit électrique comportant une inductance, l'inductance comprenant un enroulement primaire couplé magnétiquement à un enroulement secondaire chargé par une impédance de charge connectée en parallèle sur ledit enroulement secondaire, circuit caractérisé en ce qu'il comporte un moyen de commutation ayant une entrée de commande, connecté en parallèle sur l'enroulement secondaire, ledit moyen de commutation étant capable de deux états, un état passant dans laquelle l'enroulement secondaire est court-circuité en sorte que la valeur de l'inductance se trouve annulée et un état non passant dans lequel l'inductance présente une valeur nominale souhaitée.

Ainsi on supprime une cause de chute de la tension due à la présence permanente de l'inductance de réduction de la valeur de la profondeur des encoches de commutation.

De préférence, le moyen de commutation comporte, un moyen redresseur double alternance placé parallèlement à l'enroulement secondaire. Cette caractéristique permet de n'avoir qu'un seul sens de passage de courant dans une branche du moyen de commutation connectée en parallèle sur l'enroulement secondaire, cette branche du moyen de commutation comportant un interrupteur qui se trouve ainsi branché en parallèle sur l'enroulement secondaire. Du fait que le sens de passage dans cette branche est unique il est possible dans le cas où l'interrupteur est un composant ne laissant passer le courant que dans un sens, comme par exemple un transistor, de n'avoir qu'un seul interrupteur dans le circuit de commutation. Cet interrupteur peut être par exemple, un transistor ou de préférence un transistor bipolaire à grille isolée (IGBT Isolated Gate Bipolar Transistor).

L'impédance de charge de l'inductance peut être réglable.

De préférence le couplage entre l'enroulement primaire et l'enroulement secondaire est effectué au moyen d'un circuit magnétique par exemple sous forme de ferrite ou d'un autre matériau magnétique. De la sorte on peut réduire le nombre de spires dans les enroulements formant ensemble l'inductance de réduction de la profondeur des encoches de commutation. La présence d'un circuit magnétique permet de réduire ce nombre de spires par l'augmentation du coefficient de perméabilité magnétique entrant dans le calcul de l'inductance. Ainsi malgré la présence d'un circuit magnétique additionnel, on réduit globalement l'encombrement et le prix de l'inductance de réduction de la profondeur des encoches de commutation.

Enfin le circuit inductif conforme à l'invention peut être saturable, ce qui présente des avantages qui seront explicités plus loin, sur la forme et le filtrage des encoches de commutation.

Un circuit conforme à l'invention peut être utilisé pour former, en amont d'un circuit redresseur, une inductance de réduction de la profondeur des encoches de commutation. Dans ce cas il suffit que la commande du moyen de commutation en parallèle sur l'enroulement secondaire de l'inductance de réduction de la profondeur des encoches de commutation soit synchronisée avec la commande de commutation d'un redresseur connecté en série avec ladite inductance pour être non passant uniquement pendant la durée brève de la commutation de ce redresseur.

Une telle utilisation pourra concerner par exemple un redresseur hexaphasé à thyristors débitant sur une charge ledit redresseur étant lui-même alimenté par un réseau alternatif triphasé.

L'enroulement primaire de chacune des inductances selon l'invention est inséré dans chacune des phases entre le réseau et le redresseur. De façon en elle-même connue, une gâchette de chacun des thyristors du redresseur reçoit un signal logique de commande permettant la mise en conduction du thyristor à des instants appropriés. Naturellement l'utilisation n'est pas limitée à un redresseur hexaphasé alimenté par un réseau triphasé.

Ainsi de façon générale l'utilisation de l'invention concerne un circuit d'alimentation d'une charge à partir d'une source polyphasée comprenant sur chacune des phases d'alimentation une inductance connectée en série avec un ensemble redresseur composé de redresseurs, chaque redresseur de l'ensemble ayant une entrée de commande recevant un premier signal logique de commande, ledit premier signal logique commandant l'état passant desdits redresseurs, circuit d'alimentation d'une charge caractérisé en ce que chacune des inductances est formée par un enroulement primaire couplé magnétiquement à un enroulement secondaire chargé par une résistance de charge connectée en parallèle sur ledit enroulement secondaire, l'enroulement secondaire de cette inductance étant connecté en parallèle sur un moyen de commutation ayant une entrée de commande, ledit moyen de commutation étant capable de deux états, un état passant dans lequel l'enroulement secondaire est court-circuité en sorte que la valeur de l'inductance se trouve annulée et un état non passant dans lequel l'inductance présente une valeur nominale souhaitée, le moyen de commutation étant passant ou non passant selon la valeur d'un second signal logique appliqué à cette entrée de commande du moyen de commutation, le second signal logique étant délivré par des moyens de synchronisation élaborant le second signal logique pour rendre non passant pendant la commutation de chaque redresseur de l'ensemble redresseur, des moyens de commutation connectés en parallèle sur des enroulement secondaires d'inductance.

On voit ainsi que dans ce circuit d'alimentation à redresseurs chaque inductance de réduction d'encoches est constituée par un circuit selon l'une des formes de réalisation de l'invention, le moyen de commutation de chaque circuit selon l'une des formes de réalisation de l'invention étant passant ou non passant selon la valeur d'un second signal logique appliqué à son entrée de commande, le second signal logique étant délivré par des moyens de synchronisation pour rendre non passant pendant la commutation d'un redresseur, des moyens de commutation du circuit selon l'une des formes de réalisation de l'invention connecté sur une des phases d'alimentation.

Il s'agit ainsi d'un circuit d'alimentation d'une charge à partir d'une source polyphasée dans lequel chacune des phases d'alimentation est connectée en série avec une branche d'un pont redresseur double alternance formé par un ensemble de redresseurs, chaque redresseur ayant une entrée de commande recevant un premier signal logique de commande, ledit premier signal logique commandant l'état passant desdits redresseurs, circuit d'alimentation d'une charge caractérisé en ce qu'il comporte sur chacune des phases, un circuit selon l'une des formes de réalisation de l'invention, le moyen de commutation de chaque circuit selon l'une des formes de réalisation de l'invention étant passant ou non passant selon la valeur d'un second signal logique appliqué à son entrée de commande de commutation, le second signal logique étant délivré par des moyens de synchronisation synchronisant le second signal logique pour rendre non passant pendant la commutation d'un redresseur, les moyens de commutation de deux circuits selon l'une des formes de réalisation de l'invention.

Les moyens de commutation des circuits selon l'une des formes de réalisation de l'invention, qui sont rendus simultanément non passants pendant la commutation d'un redresseur affecté à une phase sont ceux affectés à ladite phase, sont le circuit affecté à ladite phase et ceux affectés à une autre phase qui se trouve pendant la commutation en court circuit avec ladite phase.

## Brève description des dessins

L'invention sera maintenant explicitée en regard des dessins annexés dans lesquels :

- la figure 1 représente un circuit électrique selon l'invention,
- la figure 2 représente un circuit d'alimentation d'une charge à partir d'un réseau triphasé dans lequel pour chaque phase, un enroulement primaire d'une inductance selon l'invention est inséré entre le réseau et un ensemble redresseur.
- la figure 3 représente un chronogramme des états passants des redresseurs d'un ensemble redresseur hexaphasé en conjonction avec une courbe représentant la valeur de la tension entre phases.
- la figure 4 représente des courbes de l'évolution dans le temps:
- de la valeur instantanée du courant dans chacune des trois phases au cours des cycles de commutation, (trois courbes supérieures)
- de la valeur absolue instantanée de la dérivée du courant dans chacune des trois phases au cours des cycles de commutation, (trois courbes centrales) et enfin,
- du second signal logique commandant l'état non passant de l'interrupteur de chacun des moyens de commutation d'inductances selon l'invention placées sur chacune des phases du réseau triphasé d'alimentation, (trois courbes inférieures).

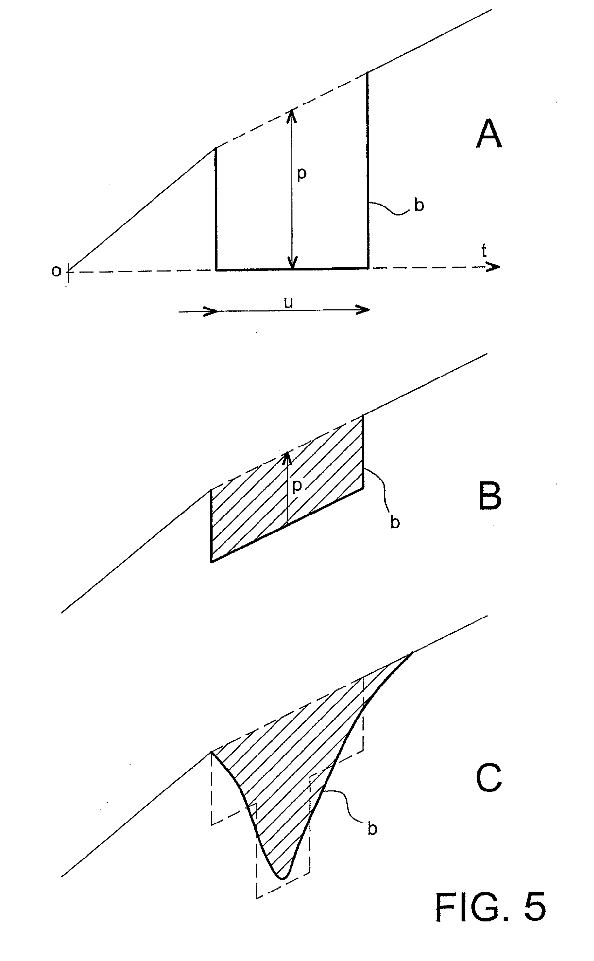

- la figure 5 comporte les parties A, B, C. Chaque partie représente une forme d'encoche de commutation.

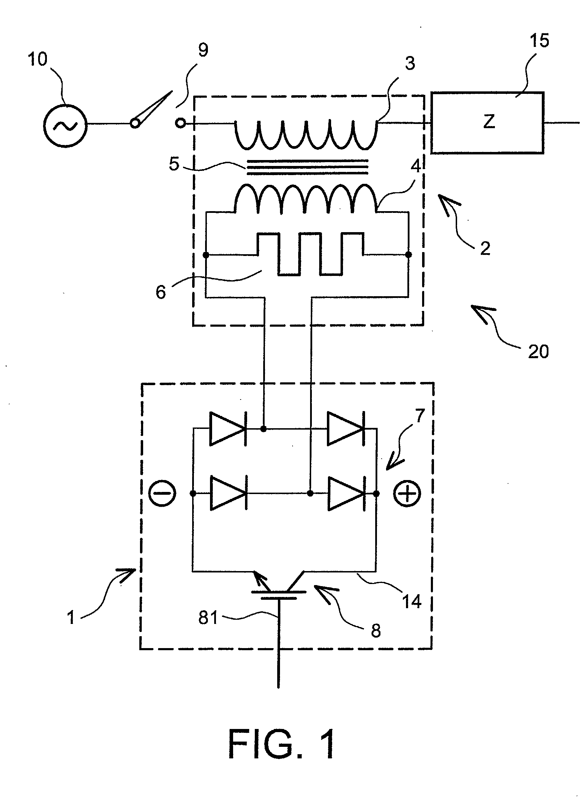

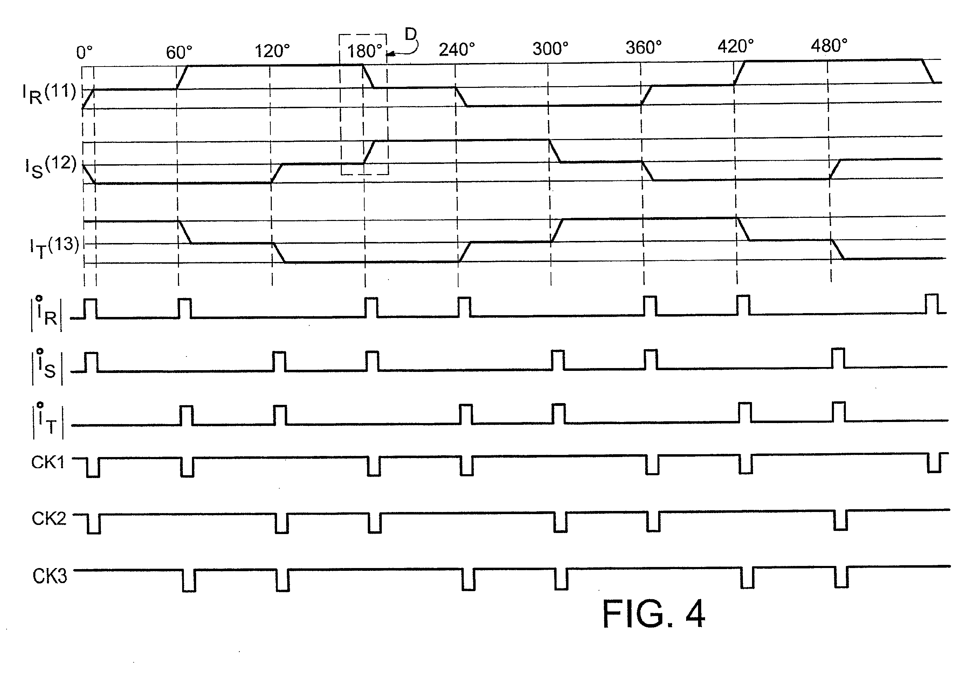

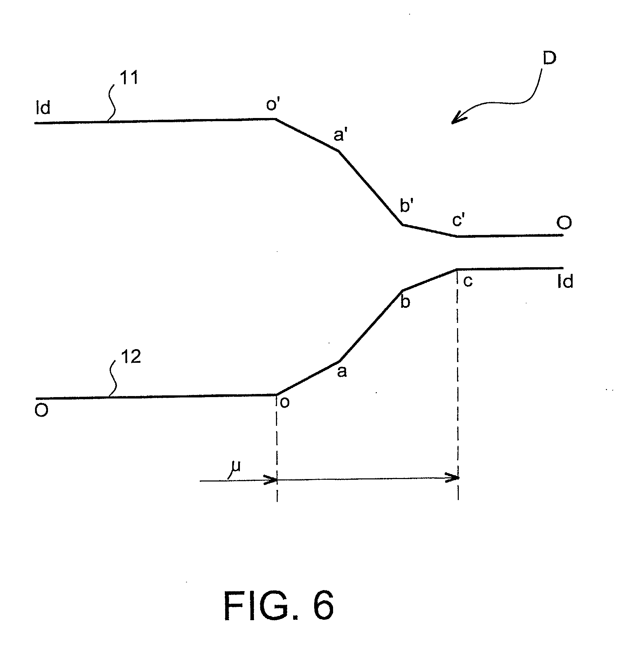

- la figure 6 est un détail agrandit de la figure 4 représentant l'évolution de la valeur du courant dans deux phases d'alimentation de l'ensemble redresseur pendant une commutation d'un redresseur de cet ensemble dans le cas où chacune de ces phases est chargée pendant ladite commutation par un circuit inductif saturable tel que représenté figure 1.

## Description d'un exemple de réalisation

La figure 1 représente un circuit électrique 20 conforme à l'invention.

Une alimentation électrique 10, par exemple un réseau délivrant un courant sinusoïdal, est connectée au travers d'un interrupteur 9 à un enroulement primaire 3 lui-même couplé en série à une impédance de charge Z 15. Conformément à l'invention, un enroulement secondaire 4 est couplé au travers d'un circuit magnétique 5 par exemple en tôle au silicium ou à ferrite à l'enroulement primaire 3. Une résistance 6, est connectée en parallèle sur l'enroulement secondaire 4. L'enroulement primaire 3, le circuit magnétique 5, l'enroulement secondaire 4, la résistance 6 forment ensemble une inductance 2. On remarque que l'inductance 2 ainsi formée est équivalente à un transformateur de courant. Avec la résistance 6 ainsi connectée le secondaire de ce transformateur, formé par l'enroulement secondaire 4 n'est jamais complètement ouvert. Il en résulte que la tension aux bornes de cet enroulement secondaire 4 est ainsi limitée, même quand un moyen de commutation 1, connecté en parallèle sur l'enroulement secondaire 4 dont il sera parlé ci-après, est dans un état non passant. La valeur de cette résistance 6 est choisie pour que la tension aux bornes de l'enroulement secondaire 4 ne dépasse jamais une valeur fixée, par exemple à quelques centaines de volts

De façon à pouvoir faire varier la valeur de l'inductance 2, un moyen de commutation 1 est connecté en parallèle sur l'enroulement secondaire 4. Le moyen de commutation 1 a une entrée de commande 81 qui permet de rendre le moyen de commutation 1 passant ou non passant. Lorsque le moyen de commutation 1 est non passant, l'inductance 2 a une valeur déterminée permettant d'amortir d'éventuelles fluctuations ou encoches de commutation intervenant sur un circuit comportant ledit enroulement primaire 3. Dans l'exemple représenté figure 1 le circuit est constitué par ladite inductance 2 et la charge 15.

Au contraire, lorsque le moyen de commutation 1 est commandé passant, l'inductance 2 a alors une valeur qui s'annule puisque le courant passe au travers du moyen de commutation 1 qui court-circuite l'enroulement secondaire 4 et en conséquence la valeur de l'inductance 2 est ramenée à une valeur négligeable dans le circuit la comprenant.

Dans l'exemple de réalisation représenté figure 1, le moyen de commutation 1 comporte un moyen redresseur double alternance 7, par exemple sous forme d'un pont de diodes, couplé en parallèle à l'enroulement secondaire 4. Un interrupteur 8 sous forme, par exemple, d'un IGBT, est présent dans une branche 14 du moyen de commutation 1 connectée en parallèle au moyen redresseur 7 et à l'enroulement secondaire 4.

On note que le moyen redresseur 7 permet au courant passant par le chemin émetteur collecteur de l'IGBT 8 d'être toujours dans le même sens quelles que soient les polarités du courant aux bornes de l'enroulement secondaire 4. De la sorte il est possible de n'utiliser qu'un seul interrupteur 8.

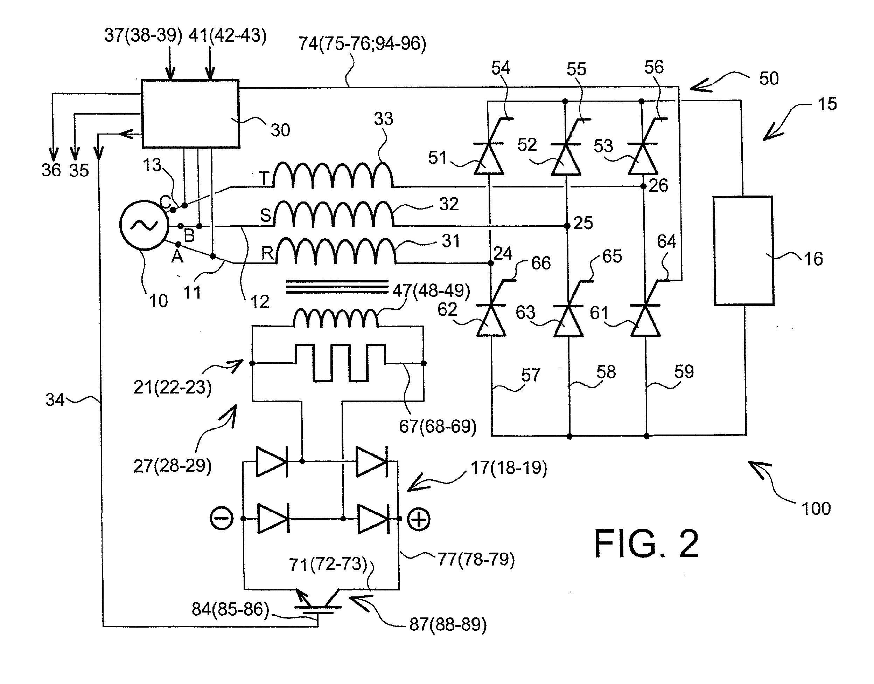

Une utilisation du circuit 20 représenté figure 1, sera maintenant explicitée en référence à la figure 2.

Cette figure représente un circuit d'alimentation électrique 100 d'une charge Z 15. Dans cet exemple destiné à illustrer une utilisation avantageuse de l'invention, la charge Z 15 est formée par un pont redresseur 50, par exemple un pont de Graetz ou de Larionov connecté en série avec une charge 16. Le circuit 100 comprend une source 10 de courant alternatif triphasé ayant 3 phases 11, 12, 13 désignées en général par R, S, T respectivement. Il s'agira en général des phases d'un réseau d'alimentation triphasé.

Chacune des phases est munie d'un circuit 27, 28, 29 respectivement, conçu comme le circuit 20 décrit en liaison avec la figure 1. Afin de ne pas surcharger la figure 2, il n'a été représenté de façon complète sur cette figure qu'un seul circuit 27 connecté sur la phase 11. Il faut cependant comprendre que chacune des deux autres phases 12 et 13 est munie de la même façon d'un circuit semblable 28, 29 respectivement. La représentation des seuls enroulements primaires 32, 33 des circuits 28, 29 est suffisante à la compréhension du dispositif représenté figure 2. Les références des éléments non représentés figurent entre parenthèses à côté de l'élément semblable représenté.

Chacune des phases 11, 12, 13 de la source 10 est connectée respectivement à un enroulement primaire 31, 32, 33 d'une inductance 21, 22, 23. Chacune des inductances 21, 22, 23 est formée comme l'inductance 2 décrite en relation avec la figure 1. Cela signifie que chacune des inductances 21, 22, 23 comporte en plus de l'enroulement primaire 31, 32, 33 respectivement un enroulement secondaire 47, 48, 49 couplé magnétiquement à l'enroulement primaire 31, 32, 33 respectivement. Une résistance 67, 68, 69 est connectée en parallèle sur chacun des enroulements secondaires 47, 48, 49. Enfin un moyen de commutation 17, 18, 19 ayant une entrée de commande 84, 85, 86 respectivement est connecté en parallèle sur chacun des enroulements secondaires 47, 48, 49 respectivement. Le moyen de commutation 17 a une branche 71 connectée en parallèle sur l'enroulement secondaire 47. Lorsque le moyen de commutation 17 est passant cette branche 71 court circuite l'enroulement secondaire 47. De même le moyen de commutation 18 a une branche 72 connectée en parallèle sur l'enroulement secondaire 48. Lorsque le moyen de commutation 18 est passant cette branche 72 court circuite l'enroulement secondaire 48. Enfin le moyen de commutation 19 a une branche 73 connectée en parallèle sur l'enroulement secondaire 49. Lorsque le moyen de commutation 19 est passant cette branche 73 court circuite l'enroulement secondaire 49. De préférence chaque moyen de commutation 17-19 comporte comme représenté figure 2 un moyen redresseur 77 -79 du moyen de commutation 17-19 respectivement connecté en parallèle avec la branche 71-73 respectivement, cette branche comportant un transistor 87-89 respectivement, par exemple un IGBT, l'entrée de commande 84-86 des moyens de commutation 17-19 respectivement étant constituée par une connexion à une entrée de commande de la conduction dudit transistor, par exemple la grille dans le cas d'un IGBT.

Chacun des enroulements primaires 31, 32, 33 est connecté au pont redresseur 50 qui est formé en trois branches 57, 58, 59. Par exemple le premier enroulement 31 de la première phase 11 est connecté à une première branche 57 en un premier point de connexion 24. Des redresseurs, dans l'exemple ici commenté des thyristors 51, 62 munis chacun d'une entrée de commande de l'état passant 54, 66 respectivement, dans l'exemple ici commenté il s'agit d'une gâchette de commande du thyristor, sont disposés sur la branche 57 de part et d'autre du point de connexion 24. La seconde branche est munie de la même façon de thyristors 52, 63 disposés sur la branche 58 de part et d'autre d'un point de connexion 25 connectant la phase 12 à la branche 58 du pont 50 au travers de l'enroulement primaire 32. Enfin la troisième branche 59 du pont 50 est munie de la même façon de thyristors 53, 61 disposés sur la branche 59 de part et d'autre d'un point de connexion 26 connectant la phase 13 à la branche 59 au travers de l'enroulement primaire 33. Comme les thyristors 51, 62 de la branche 57 les thyristors 52, 63 de la branche 58 et 53, 61 de la branche 59 ont chacun une entrée de commande de l'état passant constituée par la gâchette du thyristor, repérée 55, 65 et 56, 64 respectivement.

Le pont redresseur 50 alimenté en triphasé et son fonctionnement générateur d'encoches de commutation, sont en eux mêmes bien connus de l'Homme du métier. Pour faciliter la compréhension de la suite de l'exposé relative au fonctionnement du circuit représenté figure 2, la cause de la génération d'encoches de commutation au cours du fonctionnement du pont 50 sera rappelée brièvement ci-après.

La tension de référence utilisée pour définir dans la suite de l'exposé, l'angle de phase et la période du courant d'alimentation est la tension $V_{R-T}$ entre les phases 11 et 13.

L'allumage des thyristors du pont 50 s'effectue de façon cyclique dans l'ordre suivant: 51, 61, 52, 62, 53,63 par déphasage successifs de 60 degrés l'un par rapport à l'autre. Chaque thyristor à une durée de conduction correspondant à un tiers de la période du courant d'alimentation: soit 120° électriques

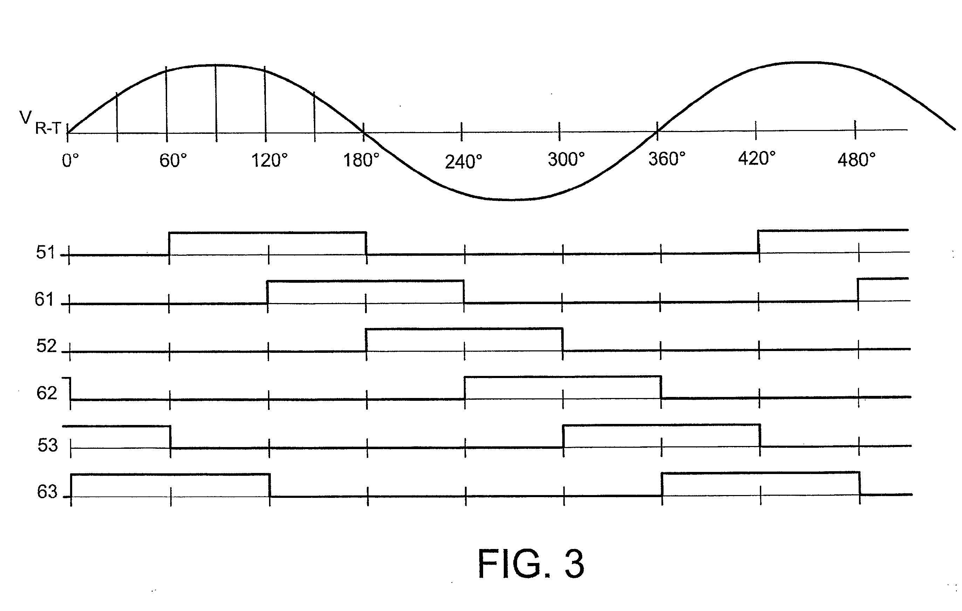

Il a été représenté sur la figure 3, la forme de la tension $V_{R-T}$, d'une part et d'autre part, par des courbes situées les unes sous les autres dans l'ordre d'allumage des thyristors, les périodes de conduction des différents thyristors du pont 50. L'axe horizontal des temps est gradué en sixième de la période de la tension $V_{R-T}$ ou ce qui est équivalent par pas de 60 degrés. Il convient de rappeler à ce stade que pour un courant périodique de fréquence F et de pulsation ω, il y a une correspondance biunivoque entre un angle et une durée. L'allumage du premier thyristor 51 du cycle s'effectue dans cet exemple avec un angle de déphasage de 60 degrés par rapport à la tension $V_{R-T}$. Cet angle est appelé angle d'ouverture du thyristor ou de façon commune angle de commande du redresseur. Sur les courbes repérées chacune 51, 61, 52, 62, 53,63 respectivement en fonction des instants et périodes d'allumage des thyristors qu'elles représentent, les passages d'un niveau bas à un niveau haut correspondent aux instants de commande de conduction des différents thyristors. Les passages d'un niveau haut à un niveau bas correspondent aux instants de cessation de conduction du thyristor. Les courbes représentées sur les différentes figures supposent que les phases sont équilibrées.

Lorsque, au début d'un cycle commençant à l'instant d'allumage du thyristor 51, les thyristors 51 et 63 sont allumés, le courant circule pendant la première moitié de la période d'allumage du thyristor 51, de la phase 11, point 24, au travers du thyristor 51, de la charge 16 et revient dans la phase 12 au travers du thyristor 63. Au cours de la seconde moitié de la période d'allumage du thyristor 51, les thyristors 51 et 61 sont allumés, le courant circule de la phase 11, point 24 au travers du thyristor 51, de la charge 16 et revient dans la phase 13 au travers du thyristor 61. De façon bien connue le courant circule entre une phase dont la tension est algébriquement maximum et une phase dont la tension est algébriquement minimum.

Ce fait est illustré par les courbes représentant les courants dans les phases 11, 12, 13, représentées figure 4. Un courant de sens positif dans la phase 11 a pour corollaire un courant négatif tout d'abord dans la phase 12, puis dans la phase 13.

Les allumages et extinctions de thyristors ne sont pas instantanés mais s'effectuent sur une petite durée, illustrée sur la figure 4 par le fait que les transitions de valeurs de courants s'effectuent sur une petite durée correspondant à un angle de commutation désigné par μ. Il en résulte que à l'instant où le thyristor par exemple 52, reçoit une commande d'allumage qui marque le début d'un passage de courant positif dans la phase 12 avec un retour marqué par un courant négatif dans la phase 13, le thyristor 51 arrive en début de sa petite durée d'extinction et n'est donc pas encore éteint. Il en résulte que pendant l'angle de commutation μ, les phases 11 et 12 sont en court circuit par les liaisons anodiques des thyristors 51 et 52. La figure 5 partie A représente l'évolution de la valeur de la tension entre phases pendant une durée angulaire incluant l'angle de commutation. Le court circuit entre phases pendant la commutation résulte en une chute de tension entre les phases 11 et 12 marquée sur cette figure par une encoche b d'angle μ et de profondeur p, constituant ce qui est appelé l'encoche de commutation. Pour chacune des 6 commandes, dans le cas d'un pont pour courant triphasé, de commutation du cycle, il y a ainsi de la même façon une encoche de commutation résultant d'un court circuit au niveau du pont 50 entre deux phases du réseau triphasé d'alimentation de la charge 15. Sur la figure 5 la largeur de l'encoche de commutation a été nettement exagérée pour des raisons de clarté de la figure.

De façon connue, la répercussion de cette encoche au niveau du réseau d'alimentation, c'est à dire en amont des points A, B, C repérés sur chacune des phases respectivement de la figure 2, est atténuée par la présence d'une inductance placée entre la source 10, constituée par exemple par la connexion sur le réseau et le pont redresseur 50. L'atténuation de la profondeur de cette encoche se traduit par une encoche de profondeur atténuée comme représenté sur la figure 5 partie B. La profondeur de cette encoche est proportionnelle au rapport L1/L1+L2. Dans ce rapport L1 désigne la valeur de l'inductance du réseau en amont des points A, B, C et L2 la valeur de l'inductance ajoutée en aval des points A, B, C. L'inductance L1 du réseau n'a pas été symbolisée sur la figure 2. Cette solution présente les inconvénients expliqués plus haut.

C'est pourquoi conformément à l'invention les inductances 21, 22, 23 sont constituées chacune par un enroulement primaire et un enroulement secondaire couplés magnétiquement entre eux, un moyen de commutation muni d'une entrée de commande permettant de court circuiter l'enroulement secondaire.

Conformément à l'invention les enroulements secondaires des inductances sont court circuités la plupart du temps. Cependant pendant la durée brève où deux phases sont en court circuit pendant la durée de commutation d'un thyristor, les inductances de ces deux phases en court circuit sont mises en service, par application aux entrées de commande des moyens de commutation des inductances de chacune de ces phases en court circuit, du second signal logique rendant non passant lesdits moyens de commutation pendant la durée de commutation.

Ainsi par exemple dans l'exemple cité plus haut de commande de commutation du thyristor 52, il a été vu que les phases 11 et 12 sont en court circuit pendant la durée de la commutation. Dans ce cas un signal logique sera appliqué aux entrées de commande 84, 85 des moyens de commutation 17, 18 relatifs aux inductances 21, 22 des phases 11 et 12, pour rendre non passant ces moyens de commutation et mettre ainsi en service lesdites inductances 21 et 22 pendant la durée de commutation.

L'émission des seconds signaux logiques de commande de commutation des moyens de commutation 17-19 est réalisée par un moyen de synchronisation 30 de l'état passant ou non passant des moyens de commutation 17, 18, 19.

Ce moyen de synchronisation 30 de l'état passant ou non passant des moyens de commutation 17, 18, 19 est représenté figure 2. Il sera maintenant commenté.

Dans l'exemple de réalisation ici commenté, le moyen de synchronisation 30 de l'état passant ou non passant des moyens de commutation 17, 18, 19 connectés respectivement en parallèle sur les enroulements secondaires 47, 48, 49 de chaque inductance 21, 22, 23 de chaque phase 11, 12, 13 reçoit le signal de commande de commutation des thyristors 51, 52, 53 ; 61, 62, 63. Ce signal de commande est reçu par des liaisons 74-76 connectées aux entrées de commande 64-66 respectivement des thyristors 61, 63, 62 et par des liaisons 94-96 connectées aux entrées de commande 54-56 respectivement des thyristors 51-53. Sur la figure 2 afin de ne pas surcharger la figure, il n'a été représenté que la liaison 74 entre le moyen de synchronisation 30 et l'entrée de commande 64 du thyristor 61.

Le moyen de synchronisation 30 a des sorties couplées par des liaisons 34-36 respectivement aux entrées de commande 84-86 des moyens de commutation 17-19 respectivement. Sur la figure 2 afin de ne pas surcharger la figure, seule la liaison 34 joignant une sortie du moyen de synchronisation 30 à l'entrée de commande 84 du moyen de commutation 17 a été représentée. Il faut cependant comprendre que le moyen de synchronisation 30 est lié par une liaison 35 à l'entrée de commande 85 du moyen de commutation 18 et par une liaison 36 à l'entrée de commande 86 du moyen de commutation 19.

Le second signal logique présent sur chacune des sorties 34-36 du moyen de synchronisation 30 est tel que, comme expliqué plus haut, chacun des interrupteurs 87-89 est la plupart du temps passant. Cependant à chaque réception du premier signal logique de commande de commutation d'un thyristor du pont redresseur 50 sur une entrée 74-76; 94-96 du circuit 30 le second signal logique sera émis. Ce second signal logique sera émis sur deux des liaisons 34-36 entre le moyen de synchronisation 30 et une entrée de commande 84-86 de commutation des moyens de commutation 17-19. Ce second signal logique a pour effet de mettre en service pendant la durée brève de commutation les deux inductances qui, en fonction du thyristor du pont redresseur 50 mis en conduction, sont en court circuit. Il est rappelé que pendant la mise en service d'une inductance 21-23 les moyens de commutation 17-19 de cette inductance sont non passants.

Une méthode pour produire le second signal logique rendant non passant les moyens de commutation 17-19, exactement pendant la durée de commutation des thyristors sera maintenant brièvement examinée en liaison avec la figure 4.

Outre les courbes déjà commentées représentant l'évolution dans le temps du courant dans les phases, il a été représenté sur cette figure l'évolution dans le temps des valeurs absolues des dérivées par rapport au temps du courant dans chacune des phases. Pendant les périodes où le courant dans les phases est constant ou fluctue légèrement la valeur de la dérivée du courant est nulle ou quasi nulle. Par contre pendant les commutations, la valeur du courant change rapidement en sorte que la dérivée du courant prend une valeur non nulle représentant cette vitesse de changement de valeur. On voit ainsi que la durée pendant laquelle la valeur de la dérivée n'est pas nulle représente sensiblement la durée de commutation. On dispose ainsi d'un signal impulsionel dont on pourra modifier de façon en elle même connue la largeur des impulsions pour l'adapter exactement à la durée de commutation.

Ce signal une fois modifié constituera le second signal logique. L'évolution dans le temps du second signal logique CK1 présent en sortie 34 du moyen de synchronisation 30, est représenté figure 4. Ce signal est constitué d'une série d'impulsions. Pendant chacune de ces impulsions l'interrupteur 87 est non passant. On voit que ces impulsions coïncident sensiblement avec les durées pendant lesquelles la dérivée du courant $I_R$ dans la phase 11 n'est pas nulle.

La durée de commutation est donnée par la formule

$$\text{Cos}\,\alpha - \text{Cos}(\alpha + \mu) = X.\text{Id}.\sqrt{2}/V$$

Dans cette formule

- $\alpha$ est l'angle de commande du redresseur,
- $\mu$ est l'angle de commutation
- Id est la valeur moyenne du courant de sortie du redresseur
- X est la valeur de la réactance série dans une phase soit $(L1 + L'2)\overline{\omega}$, L1 étant la valeur de l'inductance réseau, L'2, la valeur de l'inductance selon l'invention et $\overline{\omega}$ la pulsation du courant de la source 10,
- V est la valeur efficace de la tension entre deux phases au niveau de l'ensemble redresseur.

Ainsi on voit que pour établir la durée des impulsions du second signal logique CK1 correspondant à l'angle $\mu$ le moyen de synchronisation 30 doit de préférence, recevoir les instants de commande de conduction des thyristors reçus sur la liaison 74, les valeurs des tensions entre phases du réseau en amont des inductances 21-23, les valeurs des courants de retour dans les phases.

Il en est de même pour les seconds signaux logiques CK2 et CK3 commandant l'état non passant des inductances 22 et 23 respectivement par l'intermédiaire des liaisons 35 et 36 respectivement. Les valeurs des courants sont reçues sur des entrées 37-39 du moyen de synchronisation 30, les valeurs des tensions sur des entrées 41-43 de ce moyen 30 et les instants de commande des thyristors sont reçues par des liaisons 74-76 entre les commandes 64-66 des thyristors 61-63 et le moyen 30 respectivement ainsi que par des liaisons 94-96 entre les commandes 54-56 des thyristors 51-53 et le moyen 30 respectivement.

On notera que la réception des commandes des thyristors et donc les liaisons correspondantes 74-76 et 94-96 ne sont pas absolument nécessaires et que l'on peut s'en passer si le moyen 30 est muni de moyens pour déterminer de façon précise l'instant de passage par 0 des tensions dans chacune des phases du réseau triphasé.

Ainsi dans une forme de réalisation le circuit de synchronisation 30 a des entrées 37-39 recevant un signal représentatif de la valeur du courant de phase et des entrées 74-76, 94-96 recevant un signal représentatif des instants de commutation des redresseurs 51-53; 61-63, de l'ensemble redresseur 50.

Il peut avoir en outre des entrées (41-43) recevant un signal représentatif de la valeur de la tension entre phases.

Dans une autre forme de réalisation le circuit de synchronisation 30 a des entrées 37-39 recevant un signal représentatif de la valeur du courant de phase et des entrées 41-43 recevant un signal représentatif de la valeur de la tension entre phases. Le circuit de synchronisation 30 selon cette forme de réalisation peut avoir en outre des entrées 74-76, 94-96 recevant un signal représentatif des instants de commutation des redresseurs 51-53; 61-63, de l'ensemble redresseur 50.

Il sera examiné ci-après une forme de réalisation de l'invention particulièrement intéressante.

Dans cette forme de réalisation chacun des circuits 27-29 est constitué comme indiqué ci-dessus mais les inductances 21- 23 sont saturables. Plus précisément leur niveau de saturation est choisi pour que ces inductances soient saturés pour un courant d'une valeur faible par rapport à la valeur maximale que peut prendre le courant crête redressé dans l'un des redresseurs du pont 50. De préférence également les inductances 21-23 sont conçues pour présenter à l'état saturé une inductance de fuite en série avec l'inductance L1 du réseau.

Dans ces conditions la forme des courants dans les deux phases en court circuit pendant l'angle de commutation est détaillée sur la figure 6.

On se place comme dans l'exemple commenté plus haut à l'instant où un premier signal logique est envoyé sur la commande 55 du thyristor 52 pour rendre passant ce thyristor. Pendant la durée de commutation un court circuit s'établit entre les phases 11 et 12. Un courant passe par l'intermédiaire du pont redresseur 50 et s'écoule de la phase 11 à la phase 12. Sur la figure 4 ce phénomène est simplement marqué par une croissance du courant dans la phase 12 assorti d'une décroissance simultanée du courant dans la phase 11. Pendant la commutation le courant dans la phase 13 est un courant retour à son niveau nominal. C'est le détail des pentes de courant représentées sommairement figure 4 à l'endroit de la partie de cette figure marquée par la désignation D qui est représenté de façon détaillée et agrandie figure 6.

A l'instant de la commande de commutation du thyristor 52, le moyen de synchronisation 30 reçoit cette commande et envoie par l'intermédiaire des liaisons 34 35 des seconds signaux logiques sur les commandes 84, 85 commandant ainsi la levée du court-circuit des enroulements secondaires 47, 48 des inductances 21, 22 des phases 11 et 12. Les inductances 21, 22 sont ainsi mises en service pendant la durée de commutation.

Sur la figure 6 les instants de commutation sont matérialisés par les points o, o' sur des courbes 11 et 12 représentant respectivement les courants descendant et montant dans les phases 11 et 12. Avant la commutation et comme représenté sur les figures 4 et 6 le courant est à 0 dans la phase 12 et à une valeur nominale Id dans la phase 11. A partir du point o l'inductance 22 de la phase 12 entame une phase de saturation qui se termine au point a où cette inductance est saturée. Cela se traduit par le fait que le courant dans la phase 12 croît faiblement pendant la phase de saturation. Corrélativement le courant Id dans la phase 11 décroît faiblement jusqu'à atteindre le point a'. A l'instant où l'inductance 22 est saturée, l'inductance 21 qui était déjà saturée par le passage du courant Id reste saturée, en sorte que les deux inductances 21 et 22 sont saturées. Elles se conduisent donc comme des court circuits. Le courant continue à croître dans la phase 12 et corrélativement à décroître dans la phase 11 jusqu'aux points représentés en b et b' respectivement sur les courbes 11 et 12. Au point b' le courant dans l'inductance 21 de la phase 11 passe au dessous du seuil de saturation. L'inductance 21 se déssature selon la pente de dessaturation jusqu'à revenir à 0 au point c'. La pente de décroissance du segment b'c' sur la courbe 11 est égale à la pente du segment o'a'. Corrélativement le courant croît de façon symétrique dans la phase 11 selon le segment bc jusqu'à atteindre sa valeur nominale Id. A l'instant correspondant aux abscisses de c et c' le second signal logique reprend une valeur rendant passant les moyens de commutation 17 et 18.

L'intérêt de ce mode de réalisation sera maintenant expliqué. Sur la courbe 12 on voit que la croissance du courant dans la phase 12 commence avec une pente faible correspondant au segment oa, lequel correspond lui-même à la phase de saturation de l'une des inductances en série. La croissance du courant s'effectue ensuite selon une pente plus forte correspondant au segment ab et enfin la croissance se poursuit au cours de la phase bc selon une pente faible à nouveau jusqu'à rejoindre la valeur nominale Id. La décroissance du courant dans la phase 11 s'effectue de façon symétrique. On voit ainsi que la présence d'inductances saturables rendent les transitions de courant moins brutales. Ceci se traduit par une modification de la forme de l'encoche de commutation correspondante se traduisant par l'encoche dont le contour est représenté en partie C de la figure 5.

Sur la figure 5 partie C, la forme de cette encoche est représentée en traits plein. Il a été représenté en pointillés une forme fictive d'encoche qui va être commentée ci après. Il s'agit de l'encoche qui serait obtenue avec une inductance non saturable qui serait mise en service au début et à la fin de la période de commutation d'un redresseur du pont 50, et mise en court circuit au milieu de cette période. L'encoche fictive a ainsi une profondeur réduite en début et fin de commutation et reprend au milieu de la période de commutation la profondeur qu'elle aurait en l'absence d'inductance comme représenté par exemple en partie A de la figure 5.

Du fait de la saturation des deux inductances au centre de la période de commutation se traduisant par un court circuit naturel de ces inductances, l'encoche réelle représentée en traits pleins suit sensiblement le tracé en pointillés, mais avec une forme arrondie exempte de parties anguleuses.

Par un choix des pentes de saturation des inductances saturables, de leurs valeurs de saturation, et des valeurs des inductances de fuite à saturation, il devient possible malgré l'approfondissement central de l'encoche de diminuer sa surface. Les surfaces d'encoches représentées sur les parties A et B de la figure 5 de façon hachurée sont plus représentatives de l'importance de l'encoche que sa profondeur.

Ainsi par l'emploi d'inductances saturables il devient possible de diminuer l'importance des encoches de saturation. L'emploi d'inductances saturables offre encore un autre avantage: La forme arrondie de l'encoche se traduit par un spectre de fréquence moins large. En conséquence la réalisation de filtres d'encoches sera facilitée et le prix diminué.

## Revendications

1. Circuit électrique (20) comportant une inductance (2), l'inductance (2) comprenant un enroulement primaire (3) couplé magnétiquement à un enroulement secondaire (4) chargé par une résistance de charge (6) connectée en parallèle sur ledit enroulement secondaire (4), circuit **caractérisé en ce qu'**il comporte un moyen de commutation (1) ayant une entrée (81) de commande, connecté en parallèle sur l'enroulement secondaire (4), ledit moyen de commutation (1) étant capable de deux états, un état passant dans lequel l'enroulement secondaire (4) est court-circuité en sorte que la valeur de l'inductance (2) se trouve annulée et un état non passant dans lequel l'inductance (2) présente une valeur nominale souhaitée.

2. Circuit (20) selon la revendication 1 **caractérisé en ce que** le moyen de commutation (1) comporte un moyen redresseur (7) double alternance placé parallèlement à l'enroulement secondaire (4).

3. Circuit (20) selon la revendication 2, **caractérisé en ce que** le moyen de commutation (1) comporte une branche (14) connectée en parallèle sur l'enroulement secondaire (4), cette branche (14) portant un interrupteur (8) muni d'une entrée de commande (81), cette entrée de commande (81) de l'interrupteur (8) constituant l'entrée de commande du moyen de commutation (1) .

4. Circuit (20) selon l'une des revendications 1 à 3, **caractérisé en ce que** l'inductance (2) est saturable.

5. Circuit (100) d'alimentation d'une charge (16) à partir d'une source (10) polyphasée dans lequel chacune des phases (11, 12, 13) d'alimentation est connectée en série avec une branche (57-59) d'un ensemble redresseur (50) formé par un ensemble de redresseurs (51-53;61-63), chaque redresseur (51-53; 61-63) ayant une entrée de commande (54-56; 64-66) recevant un premier signal logique de commande, ledit premier signal logique commandant l'état passant desdits redresseurs (51-53; 61-63), circuit (100) d'alimentation d'une charge (16) **caractérisé en ce qu'**il comporte sur chacune des phases (11, 12, 13), un circuit (21-23) selon l'une des revendications 1 à 4, le moyen (17-19) de commutation de chaque circuit (21-23) selon l'une des revendications 1 à 4 étant passant ou non passant selon la valeur d'un second signal logique appliqué à son entrée de commande (84-86) de commutation, le second signal logique étant délivré par des moyens (30) de synchronisation et élaborant le second signal logique pour rendre non passant pendant la commutation d'un redresseur (51-53; 61-63), les moyens (17-19) de commutation de deux circuits (21-23) selon l'une des revendications 1 à 4.

6. Circuit (100) selon la revendication 5 **caractérisé en ce que** le circuit de synchronisation (30) a des entrées (37-39) recevant un signal représentatif de la valeur du courant de phase et des entrées (74-76, 94-96) recevant un signal représentatif des instants de commutation des redresseurs (51-53; 61-63), de l'ensemble redresseur.

7. Circuit (100) selon la revendication 6 **caractérisé en ce que** le circuit de synchronisation (30) a en outre des entrées (41-43) recevant un signal représentatif de la valeur de la tension entre phases.

8. Circuit (100) selon la revendication 5 **caractérisé en ce que** le circuit de synchronisation (30) a des entrées (37-39) recevant un signal représentatif de la valeur du courant de phase et des entrées (41-43) recevant un signal représentatif de la valeur de la tension entre phases.

9. Circuit (100) selon l'une des revendications 5 à 8 **caractérisé en ce que** la source (10) est une source triphasé et **en ce que** l'ensemble redresseur (50) est un pont redresseur hexaphasé.

FIG. 1

**FIG. 2**

$V_{R-T}$

0°  60°  120°  180°  240°  300°  360°  420°  480°

51
61
52
62
53
63

FIG. 3

FIG. 4

FIG. 5

FIG. 6